# EUROPEAN PATENT SPECIFICATION

(11) **EP 3 281 763 B1**
(45) Date of publication and mention of the grant of the patent: **09.10.2019**
(21) Application number: 16183346.2
(22) Date of filing: 09.08.2016
(51) Int. Cl.: B29C 48/92, B29C 48/355, B29C 48/04, B29C 48/05, B29C 48/30, B29C 48/345, B29C 48/91, B29B 9/06

(54) **APPARATUS AND METHOD FOR REDIRECTING A DIVERTED POLYMER STRAND**
VORRICHTUNG UND VERFAHREN ZUM UMLEITEN EINES ABGELENKTEN POLYMERSTRANGES
APPAREIL ET PROCÉDÉ POUR REDIRIGER UN BRIN POLYMÈRE DÉVIÉ

(43) Date of publication of application: 14.02.2018
(73) Proprietor: Trinseo Europe GmbH, 8810 Horgen (CH)
(72) Inventor: Rausche, Andreas, 21727 Estorf (DE); Holst, Marc, 21647 Moisburg (DE)
(74) Representative: Hoffmann Eitle

(56) References cited:
- DE-A1- 1 953 720
- DE-A1- 2 655 840
- DE-A1-102012 008 564
- JP-A- 2000 289 092
- US-A- 4 528 157
- US-A- 4 530 649
- US-A1- 2007 057 414
- US-A1- 2009 321 982
- US-B2- 8 178 015

## Description

### TECHNICAL FIELD

The present invention relates to an apparatus as well as to a method for redirecting an extruded polymer strand.

### STATE OF THE ART

Polymers as raw materials for further industrial processing are commonly transported as pellets. These pellets are generally preconfigured in extrusion lines according to the product they will be used for. In these extrusion lines, a pure polymer is generally combined with additives in an extruder. These additives serve for adjusting the desired mechanical and chemical properties needed for the application of the pellets. Other extruded products are, for example, fibres, profiles or threads or any other product that is produced by continuously guiding polymer melt through an aperture, wherein the aperture defines the geometry of the product's cross section.

Such extrusion lines generally extrude multiple polymer strands in parallel through extrusion apertures in a die head. This can be achieved by using gravitation and the polymer melt's own weight or by additionally or alternatively pressurizing polymer melt, for example using an extruder or other means. A transport mechanism may transport the strands by pulling these strands after extrusion. The strands may be cooled down in a cooling bath containing a coolant such as water before being processed further. In case of polymers as raw materials for industrial processing, the strands may enter a pelletizer which cuts these strands into pellets.

Extrusion lines generally constitute specialized high cost industrial machinery. As a result, it is of interest to let extrusion lines operate around the clock. Thus, each time the production of a strand comes to a standstill, it is the primary objective to pick up production as fast as possible. One of the frequent causes for an interruption is a disturbance during extrusion of a polymer strand. Naturally, this disturbance causes a decrease in the output of an extrusion line. The extrusion of a strand can, for example, be hindered by impurities or gas bubbles in the polymer melt that is extruded by the die head. As a result, an irregularity at the aperture or nozzle of the die head occurs so that the strand is involuntarily diverted from its normal or predetermined path of advance. This results in the continuous flow of polymer melt from the die head's nozzle being extruded in a false direction.

Commonly, the strand is dropped and forms a puddle of melt on the ground, which solidifies and has to be removed manually. These puddles are also commonly referred to as patties. The resulting polymer of such a patty is scrap material of inferior quality. On the one hand, the polymer is contaminated and, on the other hand, the polymer may be cooled without any control, which may also change the characteristics of the polymer. Generally, these patties cannot be recycled but have to be discarded.

In order to continue production, the diverted strand may be attached to an adjacent strand in order to be pulled by a transportation mechanism. This is presently done manually by an operator using a metal rod in order to clean the nozzle and to lead the extruded strand back to its predetermined path of advance. This manual attachment requires skills and practice and has to be done carefully in order to avoid any negative effect on a neighboring strand. Also, due to manual interference, work safety is an issue with this method.

DE 10 2012 008564 A1 discloses a manual technique to divert a polymer strand in the form of a lead-in device, which comprises a first strand guiding surface and a second strand guiding surface. The first strand guiding surface is designed to guide a strand reaching that surface in a direction pointing away from a granulation device, wherein the second strand guiding surface is arranged to redirect a strand towards the granulation device. In order to choose the direction to which the strand is guided, the lead-in device can be moved relative to a strand exit opening. Further, and in order to mechanically stabilise the deposition of the strands on the belt conveyor and thus avoid tangling or strand breakage, a trough plate is provided underneath the conveyor belt at least in a deposition area of the belt conveyor, where the strand, which is ejected from a continuous casting device, is deposited on the conveyor belt. Spray nozzles can be directed in the deposition area or towards the deposition area. This provides particularly good cooling and/or mechanical guidance of the strands in this area.

US 4,528,157 A discloses the feeding of molten plastic strands into a discharge trough. At its upper end the discharge trough includes a slidably movable segment that can be extended behind the fall line of the strands as they emerge from nozzles. In its operating position, the extended segment catches the strands, and can be moved into a fore-running or non-operating position permitting free passage of the strands at the side of the discharge trough. A separational element is associated with the movable segment. As the segment is moved through the fall line of the strands, the separational element acts upon the strands and effects the desired separation.

Another problem is the detection of a diverted strand. Up to now, the detection generally relies on the operator of the production line alone. In other words, the operator keeps an eye on the die head. Consequently it may take a considerable amount of time until it is realized that a problem with the extrusion of one or even several strands has occurred since visually monitoring the strands is only one of many tasks an operator has to fulfill during his or her shift.

JP 2000-289092 A discloses a mechanism for detecting an abnormal state of a pellet regenerating apparatus for regenerating plastic molding and the display of this state as an alarm.

### SUMMARY OF THE INVENTION

Thus, it is an objective of the present invention to reduce the costs of production by reducing the amount of scrap material caused by a malfunction during the extrusion of a polymer strand and the man hours spent to fix this problem. Another objective is to increase the work safety of the operator supervising the extrusion line.

These objectives are achieved by the solution defined in the independent claims. The dependent claims specify preferred embodiments of the invention.

The invention provides an apparatus according to claim 1 for redirecting an extruded polymer strand that is diverted from a predetermined path of advance. The apparatus comprises a redirecting means for applying a force to the diverted polymer strand to redirect the diverted polymer strand in the direction of the predetermined path of advance and a control unit configured to activate the redirecting means.

The combination of a control unit and a redirecting means allows for a fast and efficient redirection of a diverted or dropped polymer strand so that the diverted polymer strand returns to the predetermined path of advance.

Since it is the redirecting means that applies the force instead of an operator, no manual interference of the operator is required for redirecting the diverted polymer strand. Instead, the control unit activates the redirecting means so that an operator is not required to handle the redirection of the diverted polymer strand manually. Consequently, no special skills are needed for redirection. At the same time, work safety is considerably enhanced since there is no more manual interference by the operator necessary.

The predetermined path of advance is to be understood as the path starting with the extrusion of a polymer strand, i.e. it starts in the direction of extrusion. After extrusion of the polymer strand, the path continues to a next processing step, which may for example be a cooling step to cool down the strand with a device such as a cooling bath. In order to return the diverted polymer strand to the predetermined path of advance, the redirecting means applies a force in an angle relative to the longitudinal direction of the strand. This force reorients the diverted strand so that the strand is guided back to the predetermined path of advance. Consequently, the redirecting means applies a force to a diverted polymer strand to guide the polymer strand back on a predetermined path of advance, where it runs alongside with other extruded strands.

The polymer strand is extruded through an extrusion aperture, i. e. polymer melt is guided through this aperture, for example of a die head, under pressure. This pressure may be caused by the polymer melt's own weight and/or externally exerted pressure on the polymer melt such as pressure caused by an extruder.

Preferably, the apparatus is capable to redirect more than one extruded polymer strand since commonly a row of polymer strands are extruded at the same time in parallel. In this respect, redirection may take place for one diverted strand at a time and/or for several diverted strands in parallel. Naturally, the latter option requires a corresponding number of redirecting means, preferably one redirecting means for each extrusion aperture. A redirecting means that is capable of redirecting each of a plurality of polymer strands, if necessary, is in general less of an investment and easier to maintain. One redirecting means per extrusion aperture can, however, be the fastest way to perform a redirection of a diverted polymer strand since the redirecting means does not have to be positioned relative to that strand.

The apparatus further comprises a detection means for detecting a diverted polymer strand.

Such a detection means has the advantage that detection of a diverted polymer strand does not depend on the awareness of an operator. Instead, the control unit of the apparatus is able to detect the occurrence of a diverted strand and can redirect the strand, preferably without any interaction with the operator.

Detection may take place for a plurality of polymer strands at the same time, preferably all extruded polymer strands. Alternatively, the detection means may also scan the extruded polymer strand(s) in order to detect if in between detection intervals, i.e. between two detection scans, one of the strands has been diverted from its predetermined path of advance.

The redirecting means comprises a nozzle for ejecting a fluid towards the diverted polymer strand, wherein the fluid is preferably in a gaseous state.

Providing for a nozzle that is configured to eject a fluid in order to apply above mentioned force to a diverted polymer strand has the advantage that any contamination of the polymer can be prevented. Further, there is basically no need for cleaning the redirecting means after redirecting a diverted polymer strand since it is only the fluid ejected by the nozzle but not the nozzle itself that gets into contact with the polymer strand.

Although the fluid is preferably in a gaseous state, it is also possible to use a fluid in a liquid state. For example, if a cooling bath is used after extrusion to cool down the polymer strand, one may use the cooling fluid in order to redirect a diverted strand. However, using a gaseous fluid has the advantage that it simply gets diffused in the surrounding air after use and, thus, does not form puddles on the ground. The simplest and most cost efficient option of a gaseous fluid and, thus, the preferred option, is air. However, other gases may be used that have a special effect on the polymer or protect the polymer from the surrounding atmosphere.

The fluid may be heated to reduce the difference in temperature to the polymer melt, for example for facilitating attachment to another strand, as will be explained in further detail below. The fluid may also be cooled to give the polymer strand more structural integrity when being diverted.

In order to be able to apply a force to a diverted polymer strand, the fluid leaves the nozzle under pressure. Preferably the fluid is ejected as a fluid jet instead of a spray. The fluid is directed towards the diverted polymer strand and redirects this strand using the pressure exerted by the fluid flow. Preferably, the fluid jet has a beam angle in a range of 0° to less than 30°, more preferably less than 20° or 15° and most preferably less than 10°.

In a particularly preferred embodiment, the nozzle directs the fluid in an oblique angle to the longitudinal direction of the diverted polymer strand.

This oblique angle for directing the fluid towards the diverted polymer strand allows for a controlled redirection of the strand, in particular when the diverted strand is brought back close to the predetermined path of advance. The oblique angle is oriented in the same general direction as the flow of the extruded polymer strand that is not diverted but extruded regularly and follows the predetermined path of advance.

The oblique angle is preferably also oriented to bring a diverted polymer strand into contact with a regularly extruded polymer strand for attaching a forward end of the redirected polymer strand to the regularly or correctly extruded polymer strand. This results in the redirected polymer strand being pulled along the predetermined path of advance by the adjacent regularly extruded polymer strand.

In another preferred embodiment, the redirecting means comprises two nozzles for ejecting the fluid at opposite oblique angles relative to the predetermined path of advance.

The redirecting means according to this embodiment is particularly advantageous for extruded polymer strands that are located at the beginning or the end of a row of extruded polymer strands. With such a configuration, the nozzles can eject fluid at opposite oblique angles so that a diverted polymer strand can be redirected towards opposite directions depending on which side an adjacent intact polymer strand is present. Preferably, only one of the two nozzles ejects fluid during redirection of a diverted polymer strand.

However, it is also possible to use both nozzles at the same time to eject fluid in order to have a better control over the redirection process, in particular if the two nozzles eject the two fluid streams at opposite angles towards each other. In this respect, it may even be desired to control the force exerted by each of the two nozzles independent of each other in order to change the direction of a polymer strand that needs to be redirected.

In a preferred embodiment, the redirecting means is positioned and oriented so that the activated redirecting means applies a force to lift the diverted polymer strand.

If a malfunction occurs at an extrusion aperture, the polymer strand generally gets diverted so that from then on, the strand following gravity drops to the ground, which is why such a diverted strand is also called dropped strand. Preferably, the regular direction of extrusion is in a range from an oblique angle pointing downwards to an angle in a horizontal direction in relation to the direction of gravity. Nonetheless, extrusion may also take place in the direction of gravity. In this case, the extruded polymer strands are generally redirected upwards, i. e. to a horizontal direction, for further processing. If there is a disruption in the extrusion process occuring, the redirecting means can be used to initially redirect the following polymer strand upwards so that it reliably picks up its way along the predetermined path of advance.

The force exerted by the redirecting means is applied in order to lift the diverted polymer strand against the gravitational force. In this process, the strand is preferably lifted above the predetermined path of advance so that, when the force is reduced, the strand basically falls back on that path and even more preferably attaches itself to an adjacent polymer strand that will subsequently pull the redirected polymer strand along the predetermined path of advance.

In yet another preferred embodiment, the apparatus comprises a positioning device for positioning the redirecting means relative to the diverted polymer strand, wherein the positioning device is preferably configured to move in a direction perpendicular to the predetermined direction of extrusion of the polymer strand.

In this embodiment, it is sufficient to use one redirecting means for a row of extrusion apertures that extrude a plurality of polymer strands. If a strand of this row of polymer strands gets diverted as described above, the positioning device positions the redirecting means relative to the diverted strand so that the redirecting means is able to redirect the strand to the predetermined path of advance.

As described above, the redirecting means may comprise more than one nozzle in order to redirect a polymer strand, in particular if the polymer strand is situated at the end of a row of extrusion apertures. Alternatively or additionally, it may the redirecting means may be moved while redirecting a strand in order to bring the strand back to the predetermined path of advance.

Preferably, the positioning device comprises a linear actuator with a carriage to which the redirecting means is attached to. If the die head extrudes a row of polymer strands, the positioning device is located in relation to these polymer strands so that it is able to move the redirecting means and/or a detection means parallel to said row and perpendicular to the predetermined or regular direction of extrusion. In other words, the positioning device is placed to be able to quickly move from one polymer strand to the next one. Preferably, the direction of movement of the positioning device is parallel to a row of extrusion apertures, which is normally horizontal in relation to the direction of gravity.

In another embodiment, the redirecting means comprises an extendable deflector having a contact surface for redirecting the diverted polymer strand.

Instead of a nozzle, this embodiment preferably uses an extendable deflector that by means of a contact surface is able to redirect a diverted polymer strand. By making the deflector extendable, the deflector can be activated whenever necessary, but is kept from affecting any strand if being in a deactivated state. Preferably, the deflector is installed on a positioning device as described in the previous embodiment. In order to facilitate redirecting a diverted polymer strand, the contact surface of the deflector is preferably inclined relative to the regular direction of extrusion.

In another embodiment, the apparatus comprises a second detection means for detecting the position of a diverted strand, wherein the second detection means preferably determines the position of the diverted polymer strand.

In this embodiment, the first detection means is configured to detect the presence of a diverted polymer strand, in particular amongst a plurality of polymer strands that are extruded simultaneously by a die head of an extrusion line. The second detection means is then used to determine the exact position of a diverted polymer strand.

Preferably, the second detection means is installed on a positioning device such as the one previously described. More specifically, the second detection means detects the exact position of a diverted polymer strand by scanning along a plurality of extruded polymer strands while the positioning device is moving. If the positioning device also comprises the redirecting means attached thereto, the second detection means can directly be used to position the redirecting means relative to the diverted polymer strand for an optimum redirection.

The first or second detection means may also be used in combination with the positioning device but without the other one of the first and second detection means. In this case, the control unit performs regular scans along the row of extruded polymer strands in order to monitor these strands. During such a scan, the positioning device will move the second detection means in a scanning direction. If one of the monitored strands is diverted, the second detection means will register the diverted strand by passing by this strand during the scan.

Nonetheless, using a first detection means as well as a second detection means renders the apparatus more reliable since it is easier to detect a malfunction of the apparatus if the strands are monitored due to the signals of both the first and the second detection means.

In another preferred embodiment, the first and/or second detection means comprises a photoelectric sensor, a thermal sensor and/or an ultrasound sensor.

Using a photoelectric sensor as detection means can detect a diverted polymer strand in a cheap and efficient way with a clear signal. Using a thermal sensor also takes into account if the detected item is in fact a polymer strand. An ultrasound sensor has the advantage that it is possible to use it as both a general sensor to detect if one of a plurality of polymer strands is diverted and a more detailed sensor to detect which one of the strands is diverted since ultrasound generally allows to easily measure the distance of an item in relation to the sensor.

The system may be even more reliable if two different measurement principles are used, for example, in case of including a first and a second detection means in the apparatus.

The present invention also provides a method 2. according to claim 9 for redirecting an extruded polymer strand that is diverted from a predetermined path of advance. The method comprises the steps of activating a redirecting means with a control unit, applying a force to a diverted polymer strand by means of the activated redirecting means to redirect the diverted polymer strand to the predetermined path of advance, and deactivating the redirecting means after redirecting the diverted polymer strand.

As a benefit of this method, a diverted polymer strand can be quickly and efficiently redirected back to the predetermined path of advance. Since redirecting the diverted polymer strand is done without the need of interference by an operator, work safety is considerably improved.

In a preferred embodiment, the method comprises the step of redirecting the diverted polymer strand for attaching the diverted polymer strand to a correctly extruded, preferably adjacent, polymer strand.

In this preferred step of the method, attaching the diverted polymer strand to a correctly extruded polymer strand assists in returning the redirected polymer strand to the predetermined path of advance. This embodiment is particularly advantageous for an extrusion line, in which a polymer strand is advanced by pulling it along the predetermined path of advance after extrusion.

In another particularly preferred embodiment, the method further comprises the step of detecting the diverted polymer strand with a second detection means.

Consequently, there is no need for any interaction by the operator since detection and redirection of a diverted polymer strand can be performed fully automatic. In case of a row of extrusion apertures, this detection also includes the determination of the location of a strand along this row.

In yet another embodiment, the method also comprises the step of positioning the redirecting means relative to the diverted polymer strand, preferably before activating the redirecting means.

Since the redirecting means is positioned relative to the diverted polymer strand, it is sufficient to have one redirecting means for an extrusion line. As described above, the positioning device for positioning the redirecting means can be advantageously combined with a first and/or a second detection means.

### BRIEF DESCRIPTION OF THE DRAWINGS

The following figures illustrate preferred embodiments of the present invention. These embodiments enhance the understanding of the invention together with the following description. In these figures, same reference signs refer to features throughout the drawings that have the same or an equivalent function and/or structure.
Figure 1 shows an overview of an exemplary extrusion line, in which an apparatus for redirecting a diverted polymer strand according to the present invention may be installed.
Figure 2 shows an embodiment of an activated redirecting apparatus for redirecting a diverted polymer strand according to an embodiment of the present invention.
Figure 3 shows a redirecting apparatus for a diverted polymer strand according to the present invention including a positioning system.

### DETAILED DESCRIPTION OF PREFERRED EMBODIMENTS

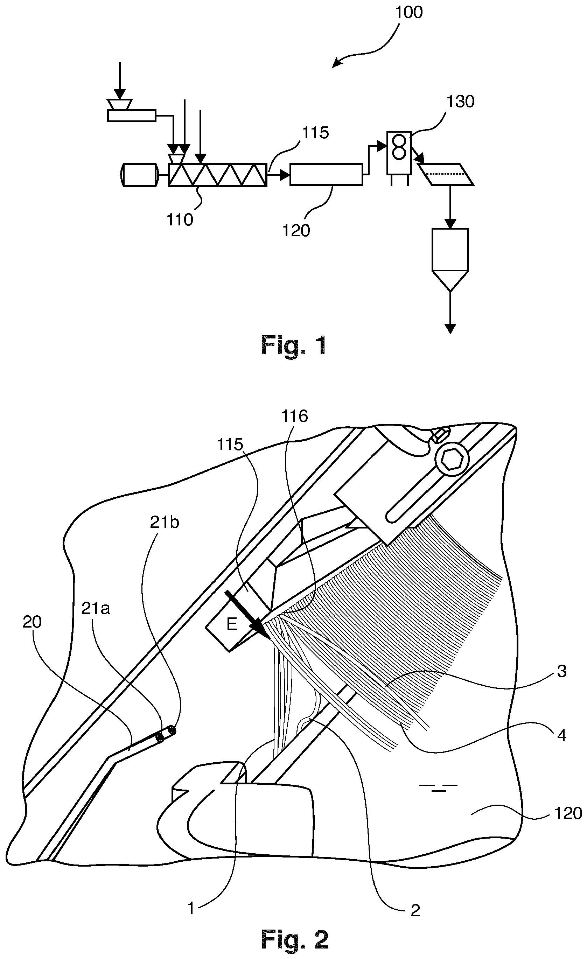

Figure 1 shows an extrusion line, in which a redirecting apparatus 10 according to the present invention can be implemented. The extrusion line 100 comprises an extruder 110 with an extruder die head 115. The extruder die head 115 comprises a row of extrusion apertures 116 that are configured to extrude polymer strands 4 in a direction of extrusion E (cf. figure 2). As mentioned above, other extrusion lines may be envisioned, where an extrusion of the polymer strands is achieved using alternative means and/or gravity for pressurizing the polymer melt in order to direct the polymer melt through extrusion apertures 116.

After extrusion, the regularly extruded polymer strands 4 advance along a predetermined path of advance that starts with the direction of extrusion E and may continue into a cooling bath 120. While being immersed in the cooling fluid of the cooling bath 120, the extruded polymer strands 4 are cooled down and may afterwards be transported further to a pelletizer 130. In the pelletizer 130, the solidified polymer strands 4 are cut into pellets for further processing.

In the exemplary extrusion line, the pelletizer 130 includes a transportation mechanism that pulls the polymer strands 4 along the predetermined path of advance starting at the extrusion die head 115, through the cooling bath 120 towards the pelletizer 130. Although pulling the polymer strands is a common way of transporting the strands, other transport mechanisms may be employed such as a roll or an inclined plane. The skilled person will appreciate that the present invention is neither limited by the processing after extrusion of the polymer strands nor by the transport mechanism used.

Figure 2 shows a close up view of the extruder die head 115 while extruding a row of polymer strands 1, 2, 3, 4. The extruder die head 115 extrudes these polymer strands 1, 2, 3, 4 through extrusion apertures 116 in a direction of extrusion E.

Figure 2 also illustrates, how an exemplary embodiment of an apparatus 10 for redirecting a diverted polymer strand 1 may proceed in order to guide a diverted polymer strand 1 back on the predetermined path of advance, which will be explained in more detail in the following.

As described above, an extruded polymer strand 4 may get diverted due to impurities or gas bubbles in the polymer melt. As a result, the extruded polymer strand 4 may drop to the ground instead of continuing its way on the predetermined path of advance. In figure 1, there are several dropped strands 1 that are extruded and then vertically drop down following the direction of gravity instead of being guided to and immersed in the fluid of the cooling bath 120.

So far, both detection and redirection of a diverted polymer strand 1 was dependent on an operator of an extrusion line 100. However, in figure 2 it is a redirecting means 20 of a redirecting apparatus 10 that guides the diverted polymer strand 1 back to the predetermined path of advance. In the embodiment shown in figure 2, this basically means to redirect the diverted polymer strand 1 to run along the predetermined direction of extrusion E.

In the exemplary embodiment of a redirecting apparatus 10 illustrated in figure 2, the redirecting apparatus 10 comprises a redirecting means 20. The redirecting means 20 includes two nozzles 21a and 21b that are configured to eject a redirecting fluid as indicated by an arrow at nozzle 21b. The ejected fluid pushes a diverted polymer strand 1 so that it returns to the predetermined path of advance. As described above, the ejected fluid is preferably ejected as a fluid jet so that the redirecting fluid is primarily aimed at a single extruded polymer strand.

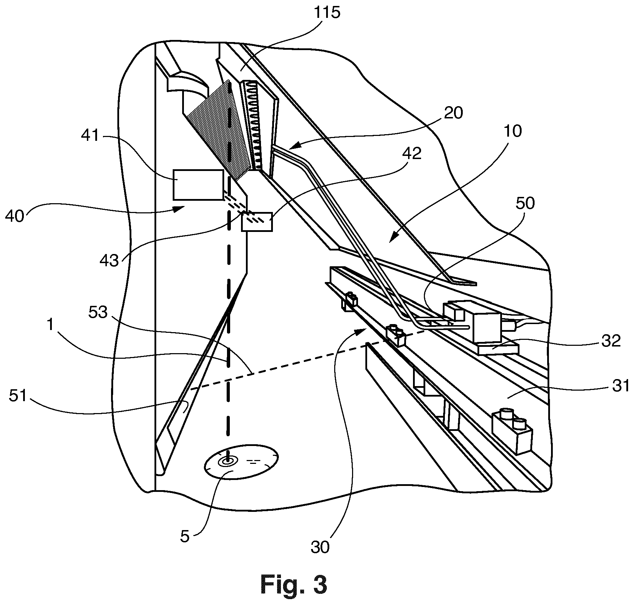

The pressure that may be applied by the redirecting fluid for guiding a diverted polymer strand 1 back to the predetermined path of advance is a function of the viscosity of the polymer strand. More specifically, an extruded polymer strand comprises a rather liquid or viscous melted polymer, which is why a diverted polymer strand 1 forms a puddle 5 once it drops to the ground (cf. figure 3). Thus, if the redirecting fluid is ejected with a velocity that is too high for the integrity of the polymer strand 1, it will not redirect that strand but instead disperse it. Consequently, the pressure for ejecting the fluid should be chosen so that it is sufficient to redirect a diverted polymer strand 1 but does not affect the integrity of this strand.

As fluid, preferably the previously mentioned fluid in a gaseous state is used. For this reason, the ejected redirecting fluid is not visible in figure 2 but is instead indicated by an arrow at nozzle 21b.

The constant force applied to the diverted polymer strand 1 lifts up that strand 1. A polymer strand that is in the process of being lifted up can also be seen in figure 2 and is marked with reference sign 2. Since the polymer strand is continuously extruded while being redirected, it behaves similar to a rope that is exposed to a gaseous flow. Thus, there is a curvature present in the continuous polymer strand 2 due to the fluid flow from the nozzle (s) 21a, 21b. The pressure exterted by the redirecting means is chosen in order to have a better control when redirecting said strand and to prevent the polymer strand from failing. Nonetheless, the polymer strand normally gets interrupted when being redirected from a puddle 5. The front of the redirected polymer strand is then guided back to the strand's predetermined path of advance.

As the nozzle 21b continues to blow redirecting fluid against the diverted polymer strand, the polymer strand may be lifted up to a degree beyond the direction of extrusion E as illustrated in the case of polymer strand 3 in figure 2. In other words, a portion of the redirected polymer strand 3 is higher in relation to gravity than a regularly extruded polymer strand 4 before the redirecting force is decreased or stopped.

In the embodiment of the redirecting apparatus 10 illustrated in figure 2, the two nozzles 21a and 21b are at an angle to each other so that redirecting fluid is ejected at opposite oblique angles. In the embodiment shown in figure 2, the nozzles 21a and 21b point away from each other. Further, the redirecting means 20 is preferably configured to activate only one of the two nozzles 21a and 21b at a time for redirecting a diverted polymer strand 1. As previously described, the two nozzles may also point towards each other in order to enhance the control over the redirection of a diverted polymer strand 1. However, such an arrangement also allows for an operation of the redirecting means 20 with only one of the nozzles 21a, 21b being activated at a time. Further, the redirecting means may be moved while redirecting a diverted strand in order to guide that strand back to the predetermined path of advance.

As illustrated in figure 2, the nozzles 21a and 21b of the redirecting means 20 are oriented in an oblique angle in relation to a regularly extruded polymer strand 4 so that the stream of redirecting fluid contacts an extruded polymer strand 4 in an oblique angle but generally flows in the same direction. This provides an enhanced control over the redirection process when the diverted polymer strand 1 is close to the predetermined path of advance. However, if the polymer strands 4 are regularly extruded along the direction of gravity, the fluid flow may also be directed perpendicular to the polymer strand 4 in order to cause the desired redirection.

Further, the fluid flow may be oriented in an oblique angle in a plane defined by the regular direction of extrusion E of multiple extrusion apertures 116. As a result, the fluid pushes a diverted polymer strand 1 in the direction of a neighboring polymer strand 4 that is correctly extruded from an extrusion aperture 116. In the process of redirecting the diverted polymer strand 1 as illustrated in figure 2, the diverted polymer strand 1 is lifted up and to the side, i.e. sideways towards an adjacent correctly extruded polymer strand 4. Thus, the redirecting fluid stream will bring the diverted polymer strand 3 into contact with a neighboring regularly extruded polymer strand 4. This may take place by pushing the redirected polymer strand 3 against a regularly extruded polymer strand 4 or when the pressure of the fluid flow exerted on the strand is decreased so that the lifted polymer strand 3 drops onto the regularly extruded polymer strand 4. Since both strands are generally not yet solidified, the redirected polymer strand 3 will be attached to the regular polymer strand 4, which in turn subsequently pulls the redirected polymer strand 3 along the predetermined path of advance towards the pelletizer 130. Although in this embodiment the strand is preferably lifted, it is also possible to attach the strand from below and sideways to a correctly extruded polymer strand 4. However, attaching from above and sideways has been shown to be a more reliable technique.

The activated redirecting apparatus 10 illustrated in figure 2 is positioned close to a first end of the die head 115. In order to be able to attach the extruded polymer strand at an end of the row of extrusion apertures 116, the nozzle 21b, which is situated closer to the first end of the die head 115 and/or points into the direction thereof, is activated. Consequently, at the other or second end of the die head 115, the other nozzle 21a will be activated and nozzle 21b will remain deactivated.

If the redirecting means 20 is attached to a positioning device 30, the control unit (not illustrated) of the redirecting apparatus 10 may be configures to determine, which of the nozzles 21a and 21b is to be activated based on the movement of the positioning device 30 as will be explained in further detail below.

In general, the apparatus 10 is capable of redirecting a diverted polymer strand. Since an extrusion line for a polymer strand typically performs the extrusion of not only one polymer strand but of a plurality of polymer strands in parallel, the apparatus is preferably capable of redirecting each of these polymer strands if it becomes diverted from its respective predetermined path of advance.

This may be achieved by providing each extrusion aperture 116 with a redirecting means 20. Another possibility is to provide a redirecting means 20 with a positioning device 30 that is able to position the redirecting means 20 relative to an extrusion aperture 116 of a polymer strand 1 that has been detected as being diverted. Nonetheless, it is also possible to provide an apparatus 10 that is a combination of the aforementioned two ways to utilize the redirecting means 20 in relation to a plurality of polymer strands extruded by an extrusion line 100.

If a positioning device 30 is installed as part of the redirecting apparatus 10, it may comprise a linear actuator 31 with a carriage 32 on which the redirecting means 20 is installed. At the end of a row of extrusion apertures 116, the nozzle to be activated will be the one located opposite to the direction of movement as directed by the positioning device 30 in order to position the redirecting means 20 relative to a diverted polymer strand 1.

As will be understood by the skilled person, the type of actuator used in the positioning device 30 depends on the arrangement of the extrusion apertures 116. For example, the extrusion apertures 116 shown in figure 2 are arranged in a row running in a horizontal direction. Consequently, the positioning device 30 should be capable to move along this row in order to be able to position the redirecting means 20 relative to each of the extrusion apertures 116. As shown in figure 3, this can be achieved by a linear actuator 31.

If a positioning device 30 is used, the activation of the positioning device 30 by the control unit is preferably done on the basis of a signal from a detection means. Such a detection means may comprise a first detection means 40 and/or a second detection means 50. A first detection means 40 may be installed relative to the extrusion apertures 116 of a die head 115 so that it is able to detect if one of the polymer strands 4 of the die head 115 becomes diverted. Such a first detection means 40 is schematically shown in figure 3.

In figure 3, the first detection means 40 is illustrated as a light barrier with a transmitter 41 located at one end of the row of extrusion apertures 116 and a receiver 42 located at the other end of the extrusion apertures 116 that is opposite to the one end. A light signal 43 is transmitted from the transmitter 41 to the receiver 42. Naturally, the transmitter 41 and receiver 42 can also be situated at one end, wherein a reflector is located at the other end that reflects the light signal from the transmitter 41 back to the receiver 42. Due to this configuration, as soon as one of the polymer strands 4 becomes diverted, the polymer strand 1 will pass through the light barrier formed by the transmitter 41 and the receiver 42, block the light signal 43 and trigger the control unit to activate the positioning device 30.

Instead of using a light barrier as the first detection means 40 and/or the subsequently described second detection means, it is also possible to use any of the sensors described above. For example, an ultrasound sensor may be used that is capable to detect the presence of and preferably the distance to a diverted polymer strand 1. Thus, such an ultrasound sensor would not only detect the presence of a diverted polymer strand 1 but also its location so that the control unit can position the positioning device 30 with the redirecting means 20 accordingly.

In particular in case of a common light barrier, a second detection means 50 may be installed as part of the redirecting apparatus 10. As shown in figure 3, this second detection means 50 is preferably installed on the carriage 32 of the positioning device 30 alongside with the redirecting means 20. In this exemplary embodiment the second detection means 50 is formed as a light barrier with both the transmitter and receiver being mounted on the carriage 32. The transmitter of the second detection means 50 emits a light signal 53 that is reflected by an opposite face, preferably a reflector 51. The opposite face or reflector 51 is facing the transmitter and is located so that a dropped strand 1 will fall in between the reflector 51 and the second detection means 50. Consequently, a dropped strand 1 will affect the light signal 53, which is registered by the receiver of the second detection means 50 and allows the control unit to position or precisely adjust the redirecting means 20 in relation to said polymer strand 1.

In an apparatus 10 comprising a first 40 and second 50 detection means, the first detection means 40 is intended for detecting the presence of a diverted polymer strand 1 amongst a plurality of extruded polymer strands 4. If a diverted polymer strand 1 is detected, the detection signal of the first detection means 40 causes the control unit to activate the positioning device 30 to start moving. While moving, the second detection means 50 constantly scans an area, where diverted polymer strands 1 may be present. As soon as the second detection means 50 receives a detection signal due to the diverted polymer strand 1, the positioning device 30 is stopped. At this stage, it is possible to provide the control unit with the ability to finely adjust the redirecting means 20 using the positioning device 30 in order to find an optimum position to redirect the diverted polymer strand 1. After the redirecting means 20 is properly positioned relative to the diverted polymer strand 1, the control unit activates the redirecting means to commence with the redirection of that strand 1 as already described above.

Alternatively, the redirecting apparatus 10 may only comprise a second detection means 50 installed on the carriage 32 of the positioning device 30. In this case, instead of detecting the presence of a diverted polymer strand 1, the carriage 32 moves the second detection means 50 in timed, preferably regular intervals along the row of extrusion apertures 116. While moving, the control unit constantly monitors the sensor of the second detection means 50 and as soon as it receives a signal of a diverted polymer strand 1, it stops and preferably adjusts the positioning device 30 and begins with the redirection of the diverted polymer strand 1.

As described above, the second detection means 50 is preferably installed on the same positioning device as the detection means 50. Alternatively, the second detection means 50 may also be moved along the row of extrusion apertures 116 of the die head 115 by a second positioning device. In this case, the redirecting means 20 only starts moving after the second detection means 50 has detected the exact location of the dropped polymer strand 1.

It will be appreciated by the skilled person that the redirecting apparatus for redirecting a diverted polymer strand as well as the method for redirecting such a polymer strand is not limited to a certain type of polymer. The apparatus according to the invention may be used for any polymer that is able to be extruded as a polymer strand such as polycarbonate, polystyrene, HIPS, SAN, ABS.

### REFERENCE SIGNS

- 1: diverted polymer strand
- 2: diverted polymer strand during lifting up
- 3: lifted up diverted polymer strand
- 4: polymer strand on predetermined path of advance
- 5: puddle or patty
- 10: redirecting apparatus
- 20: redirecting means
- 21: nozzle
- 30: positioning device
- 31: linear actuator
- 32: carriage
- 40: first detection means
- 41: transmitter
- 42: receiver
- 43: beam of light
- 50: second detection means
- 51: reflector
- 53: beam of light
- 100: extrusion line
- 110: extruder
- 115: extruder die head
- 116: extrusion aperture
- 120: cooling bath
- 130: pelletizer
- E: direction of extrusion

## Claims

1. Apparatus (10) for redirecting an extruded polymer strand (1) that is diverted from a predetermined path of advance, the apparatus comprising:
a redirecting means (20),
the apparatus being **characterized in that** it comprises
a first detection means (40) for detecting a diverted polymer strand (1) in that the redirecting means (20) comprises a nozzle (21) positioned and oriented for ejecting a fluid towards the diverted polymer strand (1) and applying a force by means of the fluid to the diverted polymer strand (1) in order to redirect the diverted polymer strand in the direction of the predetermined path of advance, and
**in that** the apparatus further comprises a control unit configured to activate the redirecting means (20).

2. Apparatus (10) according to claim 1, wherein the nozzle (21) is configured for ejecting the fluid in a gaseous state.

3. Apparatus according to any one of the preceding claims, wherein the nozzle (21) is configured for directing the fluid in an oblique angle to the longitudinal direction of a polymer strand (2) on the predetermined path of advance.

4. Apparatus according to any one of the preceding claims, wherein the redirecting means (20) comprises two nozzles (21) configured for ejecting the fluid at opposite oblique angles relative to the predetermined path of advance.

5. Apparatus according to any one of the preceding claims, wherein the activated redirecting means (20) is configured to apply a force to lift the diverted polymer strand (1).

6. Apparatus (10) according to any one of the preceding claims, further comprising a positioning device (30) for positioning the redirecting means (20) relative to the diverted polymer strand (1), wherein the positioning device (30) is preferably configured to move in a direction perpendicular to the predetermined direction of extrusion (E) of the polymer strand (1).

7. Apparatus according to any one of the preceding claims, further comprising a second detection means (50) for detecting the position of a diverted strand (1), wherein the second detection means (50) preferably determines the position of the diverted polymer strand.

8. Apparatus according to claim 7, wherein the first (40) and/or second (50) detection means comprises a photoelectric sensor, a thermal sensor and/or an ultrasound sensor.

9. Method for redirecting an extruded polymer strand that is diverted from a predetermined path of advance, the method comprising the steps of
- detecting the diverted polymer strand (1) with a first detection means (40);
- activating a redirecting means (20) with a control unit so that a nozzle of the redirecting means ejects fluid towards the diverted polymer strand (1);
- applying a force to a diverted polymer strand (1) by means of the fluid ejected by the nozzle of the activated redirecting means (20) to redirect the diverted polymer strand (1) to the predetermined path of advance; and
- deactivating the redirecting means (20) after redirecting the diverted polymer strand (1).

10. Method for redirecting an extruded polymer strand according to claim 9, comprising the step of redirecting the diverted polymer strand (1) for attaching the diverted polymer strand (1) to a correctly extruded adjacent polymer strand (4).

11. Method for redirecting an extruded polymer strand according to claim 9 or 10, comprising the step of detecting the position of the diverted polymer strand (1) with a second detection means (50).

12. Method for redirecting an extruded polymer strand according to any one of claims 9 to 11, further comprising the step of positioning the redirecting means (20) relative to the diverted polymer strand (1), preferably before activating the redirecting means (20).

## Patentansprüche

1. Vorrichtung (10) zum Umleiten eines extrudierten Polymerstranges (1), der von einem vorbestimmten Vorschubpfad abgelenkt wird, wobei die Vorrichtung umfasst:
ein Umleitmittel (20),
wobei die Vorrichtung **dadurch gekennzeichnet ist, dass** sie ein erstes Erkennungsmittel (40) zum Erkennen eines abgelenkten Polymerstrangs (1) umfasst,
dadurch, dass das Umleitmittel (20) eine Düse (21) umfasst, die positioniert und ausgerichtet ist zum Ausstoßen eines Fluids in Richtung auf den abgelenkten Polymerstrang (1) und Aufbringen einer Kraft mittels des Fluids auf den abgelenkten Polymerstrang (1), um den abgelenkten Polymerstrang in die Richtung des vorbestimmten Vorschubpfads umzuleiten, und
dadurch, dass die Vorrichtung weiter eine Steuereinheit umfasst, die ausgelegt ist, um das Umleitmittel (20) zu aktivieren.

2. Vorrichtung (10) nach Anspruch 1, wobei die Düse (21) ausgelegt ist zum Ausstoßen des Fluids in einem gasförmigen Zustand.

3. Vorrichtung nach einem der vorstehenden Ansprüche, wobei die Düse (21) ausgelegt ist zum Leiten des Fluids in einem schiefen Winkel zur Längsrichtung eines Polymerstrangs (2) auf den vorbestimmten Vorschubpfad.

4. Vorrichtung nach einem der vorstehenden Ansprüche, wobei das Umleitmittel (20) zwei Düsen (21) umfasst, die ausgelegt sind zum Ausstoßen des Fluids in entgegengesetzten schiefen Winkeln im Verhältnis zu dem vorbestimmten Vorschubpfad.

5. Vorrichtung nach einem der vorstehenden Ansprüche, wobei das aktivierte Umleitmittel (20) ausgelegt ist, um eine Kraft aufzubringen, um den abgelenkten Polymerstrang (1) anzuheben.

6. Vorrichtung (10) nach einem der vorstehenden Ansprüche, weiter umfassend eine Positioniervorrichtung (30) zum Positionieren des Umleitmittels (20) im Verhältnis zu dem abgelenkten Polymerstrang (1), wobei die Positioniervorrichtung (30) vorzugsweise ausgelegt ist, um sich in eine Richtung im rechten Winkel zu der vorbestimmten Extrusionsrichtung (E) des Polymerstrangs (1) zu bewegen.

7. Vorrichtung nach einem der vorstehenden Ansprüche, weiter umfassend ein zweites Erkennungsmittel (50) zum Erkennen der Position eines abgelenkten Strangs (1), wobei das zweite Erkennungsmittel (50) vorzugsweise die Position des abgelenkten Polymerstrangs bestimmt.

8. Vorrichtung nach Anspruch 7, wobei das erste (40) und/oder das zweite (50) Erkennungsmittel einen optoelektrischen Sensor, einen Wärmesensor und/oder einen Ultraschallsensor umfasst.

9. Verfahren zum Umleiten eines extrudierten Polymerstrangs, der von einem vorbestimmten Vorschubpfad abgelenkt ist, wobei das Verfahren die Schritte umfasst von
- Erkennen des abgelenkten Polymerstrangs (1) mit einem ersten Erkennungsmittel (40);
- Aktivieren eines Umleitmittels (20) mit einer Steuereinheit, so dass eine Düse des Umleitmittels Fluid in Richtung auf den abgelenkten Polymerstrang (1) ausstößt;
- Aufbringen einer Kraft auf einen abgelenkten Polymerstrang (1) mittels des von der Düse des aktivierten Umleitmittels (20) ausgestoßenen Fluids, um den abgelenkten Polymerstrang (1) zu dem vorbestimmten Vorschubpfad umzuleiten; und
- Deaktivieren des Umleitmittels (20) nach Umleiten des abgelenkten Polymerstrangs (1).

10. Verfahren zum Umleiten eines extrudierten Polymerstrangs nach Anspruch 9, umfassend den Schritt des Umleitens des abgelenkten Polymerstrang (1) zum Befestigen des abgelenkten Polymerstrangs (1) an einem korrekt extrudierten angrenzenden Polymerstrang (4).

11. Verfahren zum Umleiten eines extrudierten Polymerstrangs nach Anspruch 9 oder 10, umfassend den Schritt des Erkennens der Position des abgelenkten Polymerstrangs (1) mit einem zweiten Erkennungsmittel (50).

12. Verfahren zum Umleiten eines extrudierten Polymerstrangs nach einem der Ansprüche 9 bis 11, weiter umfassend den Schritt des Positionierens des Umleitmittels (20) im Verhältnis zu dem abgelenkten Polymerstrang (1), vorzugsweise vor Aktivieren des Umleitmittels (20).

## Revendications

1. Appareil (10) pour réorienter un brin de polymère extrudé (1) qui est dévié d'un trajet d'avancement prédéterminé, l'appareil comprenant :
un moyen de réorientation (20),
l'appareil étant **caractérisé en ce qu'**il comprend un premier moyen de détection (40) pour détecter un brin de polymère dévié (1), **en ce que** le moyen de réorientation (20) comprend une buse (21) positionnée et orientée pour éjecter un fluide vers le brin de polymère dévié (1) et appliquer une force au moyen du fluide au brin de polymère dévié (1) afin de réorienter le brin de polymère dévié dans la direction du trajet d'avancement prédéterminé et **en ce que** l'appareil comprend en outre une unité de commande configurée pour activer le moyen de réorientation (20).

2. Appareil (10) selon la revendication 1, dans lequel la buse (21) est configurée pour éjecter le fluide à l'état gazeux.

3. Appareil selon l'une quelconque des revendications précédentes, dans lequel la buse (21) est configurée pour orienter le fluide sous un angle oblique avec la direction longitudinale du brin de polymère (2) sur le trajet d'avancement prédéterminé.

4. Appareil selon l'une quelconque des revendications précédentes, dans lequel le moyen de réorientation (20) comprend deux buses (21) configurées pour éjecter le fluide sous des angles obliques opposés par rapport au trajet d'avancement prédéterminé.

5. Appareil selon l'une quelconque des revendications précédentes, dans lequel le moyen de réorientation activé (20) est configuré pour appliquer une force pour soulever le brin de polymère dévié (1).

6. Appareil (10) selon l'une quelconque des revendications précédentes, comprenant en outre un dispositif de positionnement (30) pour positionner le moyen de réorientation (20) par rapport au brin de polymère dévié (1), dans lequel le dispositif de positionnement (30) est de préférence configuré pour se déplacer dans une direction perpendiculaire à la direction d'extrusion (E) prédéterminée du brin de polymère (1).

7. Appareil selon l'une quelconque des revendications précédentes, comprenant en outre un second moyen de détection (50) pour détecter la position d'un brin dévié (1), dans lequel le second moyen de détection (50) détermine de préférence la position du brin de polymère dévié.

8. Appareil selon la revendication 7, dans lequel le premier (40) et/ou le second (50) moyen de détection comprend ou comprennent un capteur photoélectrique, un capteur thermique et/ou un capteur ultrasonique.

9. Procédé de réorientation d'un brin de polymère extrudé qui est dévié d'un trajet d'avancement prédéterminé, le procédé comprenant les étapes consistant à
- détecter le brin de polymère dévié (1) avec un premier moyen de détection (40) ;
- activer un moyen de réorientation (20) avec une unité de commande de sorte qu'une buse du moyen de réorientation éjecte un fluide vers le brin de polymère dévié (1) ;
- appliquer une force à un brin de polymère dévié (1) au moyen du fluide éjecté par la buse du moyen de réorientation activé (20) afin de réorienter le brin de polymère dévié (1) vers le trajet d'avancement prédéterminé ; et
- désactiver le moyen de réorientation (20) après avoir réorienté le brin de polymère dévié (1).

10. Procédé de réorientation d'un brin de polymère extrudé selon la revendication 9, comprenant l'étape de réorientation du brin de polymère dévié (1) pour fixer le brin de polymère dévié (1) à un brin de polymère adjacent (4) correctement extrudé.

11. Procédé de réorientation d'un brin de polymère extrudé selon la revendication 9 ou 10, comprenant l'étape de détection de la position du brin de polymère dévié (1) avec un second moyen de détection (50).

12. Procédé de réorientation d'un brin de polymère extrudé selon l'une quelconque des revendications 9 à 11, comprenant en outre l'étape de positionnement du moyen de réorientation (20) par rapport au brin de polymère dévié (1), de préférence avant d'activer le moyen de réorientation (20).
